Europäisches Patentamt

European Patent Office

Office européen des brevets

(11) Veröffentlichungsnummer: **0 286 696 B1**

(12) **EUROPÄISCHE PATENTSCHRIFT**

(45) Veröffentlichungstag der Patentschrift: **22.01.92**

(51) Int. Cl.⁵: **B23K 7/00**, B22D 11/126

(21) Anmeldenummer: **87105397.1**

(22) Anmeldetag: **11.04.87**

(54) **Brennschneidmaschine mit Entbartungseinrichtung.**

(43) Veröffentlichungstag der Anmeldung:
**19.10.88 Patentblatt 88/42**

(45) Bekanntmachung des Hinweises auf die
Patenterteilung:
**22.01.92 Patentblatt 92/04**

(84) Benannte Vertragsstaaten:
**AT DE ES FR GB IT**

(56) Entgegenhaltungen:
**EP-A- 0 103 037**
**FR-A- 2 294 784**
**US-A- 4 063 059**

(73) Patentinhaber: **AUTE AG Gesellschaft für autogene Technik**
**10, Rue St. Honoré**
**CH-2000 Neuchâtel(CH)**

(72) Erfinder: **Menning, Glyndwr**
**Furlongs, Boothorpe Lane, Blackfordby**
**Burton-on-Trent, Staffordshire(GB)**
Erfinder: **Lotz, Horst K.**
**Fasanenweg 7**
**Königstein-Johanniswald(DE)**
Erfinder: **Thomma, Günter**
**Landsberger Strasse 17**
**Wiesbaden-Delkenheim(DE)**
Erfinder: **Unger, Jürgen**
**August-Wolff-Strasse 17**
**Wiesbaden-Biebrich(DE)**

(74) Vertreter: **Blumbach Weser Bergen Kramer**
**Zwirner Hoffmann Patentanwälte**
**Sonnenberger Strasse 100**
**W-6200 Wiesbaden 1(DE)**

## Beschreibung

Die Erfindung betrifft eine Brennschneidmaschine mit Entbartungseinrichtung zum bartfreien Schneiden von durch Strangguß kontinuierlich erzeugten Werkstücken, wie Vierkant-, Sechskant- oder Rundknüppeln bzw. -blöcken und Brammen aus Stahl, mit einer Einrichtung zum Wärmeschutz.

Derartige Maschinen sind einer hohen Wärmestrahlung der Stränge ausgesetzt. Es ist bekannt, wasserdurchflossene Wärmeschutzplatten vor dem Maschinengehäuse anzuordnen oder, wie die FR-A-2 294 784 zeigt, die Brennschneidmaschine in einem wasserdurchflossenen doppelwandigen Kessel anzuordnen. Derartige Wärmeschutzeinrichtungen sind sehr aufwendig, und die Zugänglichkeit wird stark erschwert. Es ist daher weiter bekannt, statt eines wasserdurchflossenen Kessels eine wasserdurchflossene Schale vorzusehen, die von Stirnplatten abgeschlossen wird und mit einer Deckelplatte versehen ist. Hierdurch wird die Zugänglichkeit zwar erleichtert und die Herstellung etwas vereinfacht, jedoch ist eine derartige Wärmeschutzeinrichtung nach wie vor als sehr aufwendig anzusehen, und die Zugänglichkeit läßt nach wie vor sehr zu wünschen übrig.

Auch ist es bekannt, wasserdurchflossene Rohre an Maschinengehäusen zur Ableitung von Wärme anzubringen. In allen diesen Fällen dient das Maschinengehäuse als tragendes Maschinenbauteil mit einer Reihe von bearbeiteten Flächen, Bohrungen und Lagerstellen. Diese Brennschneidmaschinen enthalten alle einen gleichstrommotor-getriebenen Schneidantrieb mit einer durch die Stirnseite austretenden Antriebswelle für eine pendelartige Brennerbewegung oder für eine schlittenführungsartige Brenner-Parallelbewegung mit Ritzel- und Zahnstangenantrieb, wobei diese empfindlichen Teil, die geschmiert und reingehalten werden müssen, außerhalb des Gehäuses liegen.

Bei der pendelnden Brennerbewegung tritt beim Anschneiden und Ausschneiden der größte Düsenabstand auf und der Brenner nimmt eine ungünstige Winkelstellung ein. Das stellt eine Gefahr für die sichere Wirkungsweise dar und besondere Maßnahmen, wie eine zeitweise verringerte Schneidgeschwindigkeit,werden erforderlich. Zudem erzeugt die Brennerteilkreisbewegung eine unerwünscht hohe Schneidgeschwindigkeit an der Werkstückunterseite. Auch die parallel zur Werkstückoberfläche stattfindende Brenner-Schlittenbewegung weist ähnliche Nachteile beim Ausschnitt durch den sogenannten Brennerschnittnachlauf auf, insbesondere aber beim Brennschneiden von Rund- oder Sechskant- oder Achtkantflächen oder bei Brammen mit stark abgerundeten bzw. abgeschrägten Kanten.

Weitere Schwierigkeiten ergeben sich hinsichtlich eines sicheren Abtastens der Anschneidkante oder -fläche mit Kantentastenhebeln. Bei den Pendelbrennern wird die Tastgenauigkeit des mitgedrehten Tasthebels durch die unvermeidbaren Höhenbewegungen der Werkstücke stark beeinflußt. Dazu kommt bei den Flachformaten noch das Schleifen über die Werkstückoberfläche mit der Gefahr des Verhakens bei der Rückführung.

Eine besondere Schwierigkeit bereitet beim Gegeneinanderschneiden mit zwei Schneidbrennern an einem Schnitt zur Schneidzeitverkürzung das Nutzen der höchstmöglichen Schneidgeschwindigkeit der Brenner durch die Geometrie der Brennerstellung beim Aufeinandertreffen der Brenner, etwa in der Werkstückmitte und des zu schneidenden Reststückes. Hier besteht die Gefahr der Schneidunterbrechung.

Weitere Probleme bei den bisher bekannten Brennschneidmaschinen bestehen darin, daß es noch keine betriebssichere und einfache Einrichtung zum Entfernen des Brennbartes gibt, die die verschiedenen waagerechten und senkrechten Bewegungen bzw. Lagerungen ausgleicht. Aus FR-A-2 294 784 geht hervor, wie die Teile in einem geschlossenen Zylinder gebracht wurden, der völlig demontiert werden mußte, wenn Reparaturen oder Wartungen vorgenommen werden sollten. Die EP-A-0 103 037 zeigt die Weiterentwicklung eines Doppelmantelgehäuses mit Deckelkonstruktion, wo der Zugang bereits erleichtert ist und nur die untere Hälfte als Doppelmantel ausgestattet wurde.

An der Maschine selbst hat sich als großer Nachteil herausgestellt, daß der obere Maschinendeckel oft von innen mit Maschinen- oder Elektroteilen bestückt ist, die zugänglich sein müssen. Dabei werden die schweren Deckel für den Zugang in das Maschineninnere aufgeklappt und verriegelt. Der Kraftaufwand und die Verletzungsgefahr beim Zufallen sind erheblich und die Zugänglichkeit ist von der Deckellager- bzw. Offenstellungsseite sehr schlecht.

Der Erfindung liegt daher die Aufgabe zugrunde, eine neuartige Brennschneidmaschine mit Entbartungseinrichtung verfügbar zu machen, die neben einem zuverlässigen und optimierten Arbeitsbetrieb eine günstige Herstellung und erleichterte Zugänglichkeit für Reparatur und Wartung ermöglicht.

Die Erfindung besteht darin, daß sämtliche Maschineneinrichtungen an einer Grundplatte mit aufgesetztem Dichtkragen befestigt sind, daß alle dem Werkstück zugekehrten Maschinenteile in einem wassergekühlten Trog geschützt Untergebracht sind, der ebenfalls an der Grundplatte unten befestigt ist, und daß die Maschine durch einen waagrecht ausschwenkenden oder verschiebbaren, vorzugsweise zusammenfaltbaren Deckel oben abgeschlossen ist, und daß an der Stirnseite der Maschine ein kaminartiges Schlanch- und Brennerschutzgehäuse angeordnet ist, in Kombination mit den Merkmalen des Oberbegriffs des Anspruchs 1.

Eine zweckmäßige Ausführungsform besteht darin, daß der Dichtkragen Durchführungen von an der Grundplatte befindlichen Maschinenteilen besitzt, in diesen Bereichen Dichtelemente trägt und an der Oberseite zum Abdichten des Deckels ausgebildet ist.

Vorteilhafterweise besteht der Brennerschneidantrieb aus einem Gleichstrommotor mit einem elektronischen Impulsgeber für die Brennerwegsteuerung, aus einer Zahnriemenscheibe und einem Parallelogramm, das an einem unteren Gelenkpunkt mittels Zahnriemen über eine weitere Zahnriemenscheibe angetrieben wird und im Bereich des oberen Lenkers einen Brennerhalter trägt, der den Dichtkragen in Werkstückbreite durchdringt und sich vom Start her anhebend und ab Wegmitte abfallend bewegt.

Eine zweckmäßige Ausführungsform der Erfindung besteht darin, daß am Brennerhalter ein schwenkbarer, den Brenner in Schneidrichtung überragender Antasthebel vorgesehen ist, der ein elektrisches Schaltsystem schließt oder unterbricht, bis eine Werkstückberührung stattfindet.

Dabei ist mit Vorteil vorgesehen, daß ein ortsfester Anlaufbolzen vorgesehen ist, gegen der Tasthebel beim weiteren Vorlauf aufläuft und vom Werkstück abgehoben wird, beim Rücklauf dagegen wieder gegen die Werkstückseite gleitet, wobei ein elektrischer Kontakt geschaltet wird, wenn der Tasthebel sich vom Werkstück löst.

Die Erfindung soll nachstehend unter Bezugnahme auf die beigefügten Zeichnungen näher erläutert werden. In den Zeichnungen zeigen:

Fig. 1 eine Seitenansicht der Brennschneidmaschine;

Fig. 2 eine Seitenansicht der Brennschneidmaschine, teilweise im Schnitt;

Fig. 3 eine Querschnittansicht mit dem Elektromotorantrieb;

Fig. 4 eine Teilquerschnittansicht mit einer Entbartungseinrichtung;

Fig. 5 eine Teilquerschnittansicht, die das Parallelogrammsystem zeigt;

Fig. 6 eine Stirnansicht, in der das Tasthebelsystem dargestellt ist;

Fig. 7 eine Seitenansicht mit zurückschiebbarem Deckel in geschlossenem Zustand; und

Fig. 8 eine Seitenansicht entsprechend Fig. 7, in der der geöffnete Zustand dargestellt ist.

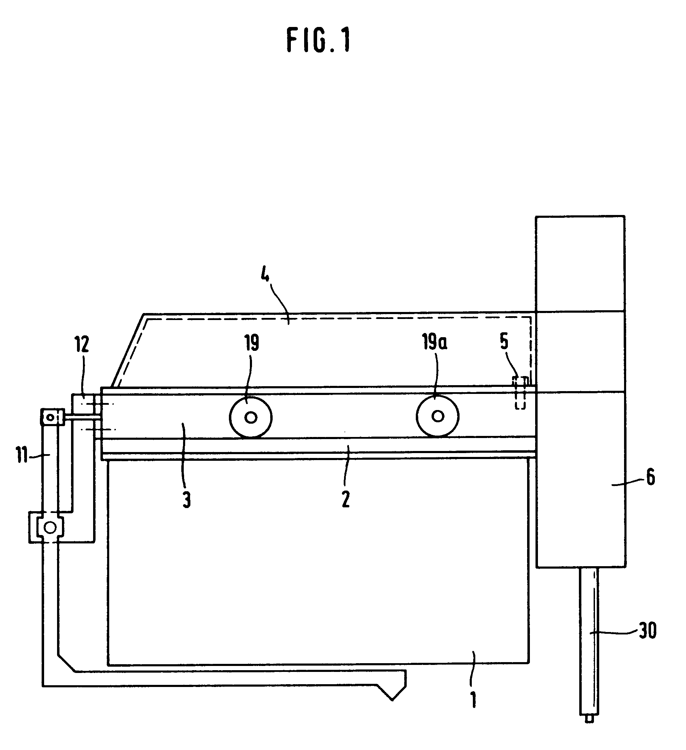

In Fig. 1 ist eine Brennschneidmaschine dargestellt, die aus einem Trog 1 besteht, auf der eine Grundplatte 2 mit aufgesetztem Dichtkragen 3 ruht und die durch einen Deckel 4 oben abgeschlossen ist. Der Deckel 4 ist um einen Drehpunkt 5 ausschwenkbar gelagert. An der Stirnseite der Brennschneidmaschine befindet sich ein Schlauch- und Brennerschutzgehäuse 6, aus dem unten der Brenner 30 hervorragt. Der Trog 1 weist keinerlei Durchbrüche und Lagerstellen auf, die vielmehr alle auf den Dichtkragen 3 konzentriert sind. Dieser ist mit allen Lagerstellen, Durchgängen und Einrichtungen für die Verbindung des Maschineninneren mit außenliegenden Teilen, wie Brenner 30, Laufräder 19, Aufklemmhebel 11 und Entbartungshebel 44 versehen. Der Deckel 4 ist möglichst leichter Bauart und nicht besonders gekühlt. Auf diese Art und Weise sind das Maschineninnere, die Schlauchführungen und die Einrichtungen für die Bewegung des Brenners 30 gegen Wärme, Schlackenspritzer und Schmutz geschützt.

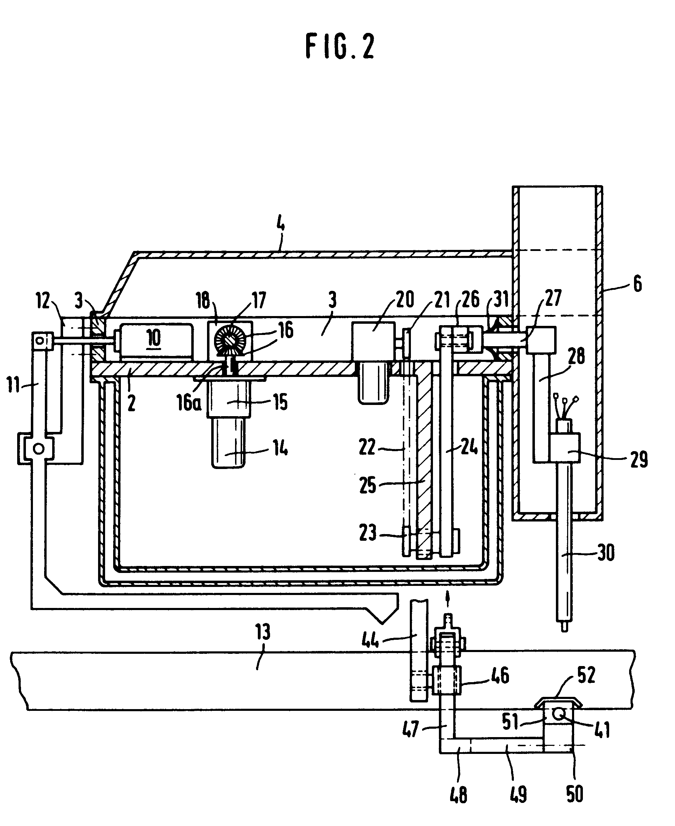

Wie Fig. 2 zeigt, ist auf der Grundplatte 2 ein Preßluftzylinder 10 montiert. Der Preßluftzylinder 10 bewegt den Aufklemmhebel 11, der an einem Lagerarm 12 am Dichtkragen angebracht ist. Auf diese Weise wird ein Synchronlauf zwischen der Brennschneidmaschine und dem Gießstrang 13 hergestellt.

Um die Brennschneidmaschine verfahren zu können, ist ebenfalls an der Grundplatte 2 ein Elektromotor 14 mit einer Kupplungs- und Bremseinheit 15 angebracht. Die Kupplung- und Bremseinheit 15 mit Elektromotor 14 hängen von der Unterseite der Grundplatte 2 herab. Die elektromagnetisch betätigbare Kupplung in der Kupplung- und Bremseinheit 15 ist über eine Welle 16a, die durch die Grundplatte 2 nach oben hindurchgeführt ist, mit einem Kegelradpaar 16 verbunden, so daß die Antriebskraft von der Welle 16a auf die Antriebsachse 17 übertragen wird. Diese ist in Lagern 18 gelagert, durchbricht den Dichtkragen 3 und trägt die in Fig. 1 gezeigten Laufräder 19. Wie Fig. 2 zeigt, ist vorn im Bereich des Schlauch- und Brennerschutzgehäuses 6 ein zweites Laufräderpaar 19a angeordnet, das ebenfalls in Lagern gelagert ist, die auf der Grundplatte 2 angeordnet sind, wobei die Achsen den Dichtkragen 3 durchbrechen. Dieses Laufradpaar 19a ist jedoch ohne Antrieb.

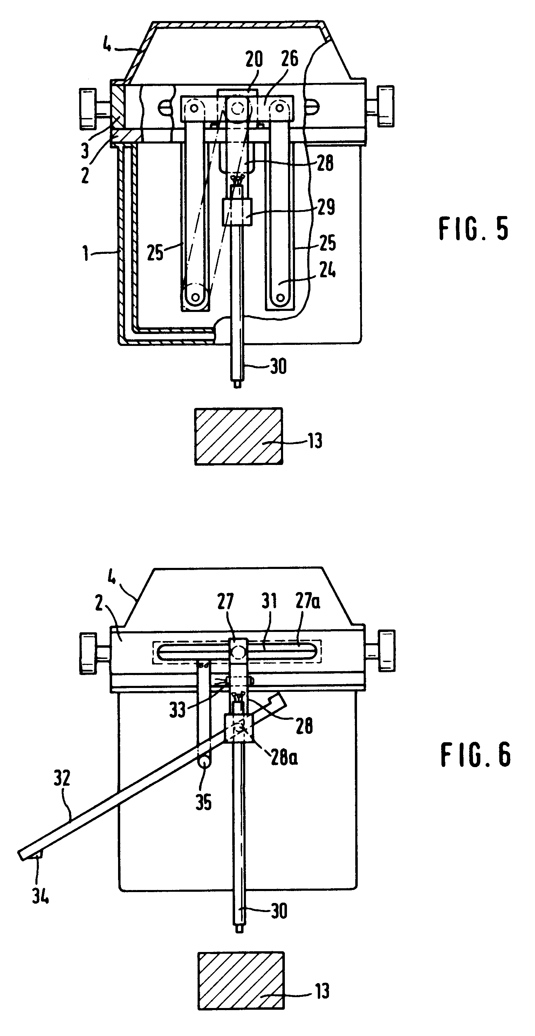

Wie aus den Figuren 2 und 5 zu entnehmen ist, sitzt auf der Grundplatte 2 weiterhin ein Getriebemotor 20, der eine Zahnriemenscheibe 21 trägt. Ein auf der Zahnriemenscheibe 21 sitzender Zahnriemen 22 durchdringt die Grundplatte 2 nach unten und treibt eine in der Nähe des Bodens des Troges 1 sich befindende Zahnriemenscheibe 23 an, die an einem Antriebshebel 24 eines an Haltern 25 im Trog 1 gelagerten Parallelogrammsystems angebracht ist. Ein oberer Lenker 26 des Parallelogrammsystems ist mit einem Brennerhalter 27 verbunden, der den Dichtkragen 3 auf der Stirnseite des Trogs 1 durchdringt. Durch das Parallelogrammsystem wird der Brennerhalter 27 im Bewegungsablauf zur Wegmitte hin angehoben, um danach wieder abzufallen. Der Brennerhalter 27 trägt über eine Verlängerung 28 und einem Klemmhalter 29 einen Schneidbrenner 30, der auf diese Weise kurzgehalten werden kann und ebenso einen zur Wegmitte hin ansteigend und danach abfallenden Bewegungsablauf mitmacht, so daß durch die Pendelaufhängung entstehende Teilkreisbewegung des Brenners 30 weitgehend kompensiert wird.

Der Brennerhalter 27 ist im Bereich des Bewegungsschlitzes 27a, wie er in Fig. 6 zu sehen ist, z.B. rund, halbrund oder elliptisch geformt, um z.B. sich überlappende Lippen einer elastischen, zweiteiligen Dichtung 31 ohne Zerstörung auseinanderzuschieben. Auch der Dichtkragen 3 selbst kann bei entsprechend gearbeitetem Bewegungsschlitz 27a für einen einzigen elastischen Dichtstreifen als Gegenfläche dienen.

Obwohl in den Figuren nur ein Schneidantrieb mit einem Brenner 30 dargestellt ist, können auch zwei parallel oder gegeneinander arbeitende Schneidantriebe mit entsprechender Anordnung, wie oben beschrieben, für doppelte oder breite Gießstränge 13 vorgesehen sein.

In Fig. 6 ist auf der Stirnseite der Brennschneidmaschine das in den Figuren 1 und 2 dargestellte Schlauch- und Brennerschutzgehäuse 6 entfernt. Auf diese Weise ist der Brennerhalter 27 mit seiner Anordnung im Bewegungsschlitz 27a mit den Dichtlippen 31 sichtbar. An der Verlängerung 28 ist bei 28a ein Kantentasthebel 32 drehbar gelagert. Dem Kantentasthebel 32 ist ein elektrischer Schalter 33 zugeordnet und hängt durch sein Gewicht gerade am Brenner 30 herunter, wenn dieser sich in seiner Ausgangsstellung befindet. Dabei steht der Kantentasthebel 32 mit einem an seinem vorderen Ende vorgesehenen Verschleißstück 34 vor und berührt den Gießstrang 13 zuerst. Der Kantentasthebel 32 löst sich beim Weiterfahren somit von dem elektrischen Schalter 33 und löst damit den Gasfluß und die Schneidgeschwindigkeit aus. Beim Weiterlauf schlägt der Kantentasthebel 32 an einem Anschlag 35 an, so daß er beim Weiterlauf hochgedrückt wird, wobei er beim Rücklauf wieder gegen die Seite des Gießstranges gleitet und ein elektrischer Kontakt zustande kommt, wenn der Tasthebel 32 sich vom Gießstrang 13 löst.

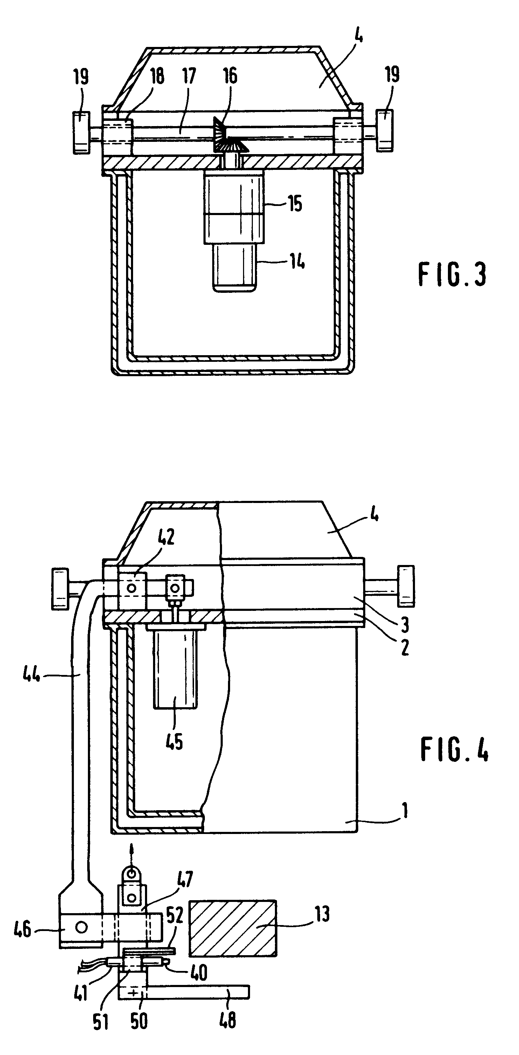

Wie die Figuren 2 und 4 zeigen, ist ein Entbartungshebel 44 in einem Lagerblock 42 am Dichtkragen 3 gelagert. Der Entbartungshebel 44 trägt einen Entbartungsbrenner 41 mit einer Entbartungsdüse 40, die sich im Bereich an der Unterseite des Gießstranges 3 befindet. Angetrieben wird der Entbartungshebel 44 von einem Preßluftzylinder 45, der wiederum an der Grundplatte 2 angeordnet ist und von diesem nach unten in den Trog 1 herabhängt. Ein in Grenzen drehbarer Anstellbacken 46 sorgt für ein paralleles Anliegen bei verschiedenen Stellungen des Entbartungshebels 44. Durch oder an dem Anstellbacken 46 ist eine Senkrechtführung vorgesehen, indem ein Höhenschlitten 47 einen Höhentaster 48 trägt. Dieser wird nach dem Anlegen des Anstellbackens 46 mittels eines nicht dargestellten Preßluftantriebs nach oben gezogen und gegen die Unterfläche des Gießstranges 13 bewegt und angelegt. Zu diesem Zweck befindet sich an dem Höhenschlitten 47 ein Ausleger 49, der einen winkelverstellbaren Brennerhalter 50 mit einer Brennerklemmung 51 für den Entbartungsbrenner 40 trägt. Über der Brennerklemmung 51 ist zum Schutz des Entbartungsbrenners 40 eine Schutzhaube 52 gegen Schlackenspritzer vom eigentlichen Brennschneiden durch den Brenner 30 angeordnet. Wie aus den dargestellten Figuren zu entnehmen ist, ermöglicht die vorliegende Erfindung im Gegensatz zu bisherigen Konstruktionen mit Hilfe des Dichtkragens 2, daß der Deckel 4 ganz oder teilweise um eine Senkrechtachse 5 verschwenkt wird. Damit werden die innen liegenden geschützten Maschinenteile ohne Anheben eines Deckels zugänglich. Das bedeutet, daß weniger Kraftaufwand erforderlich ist und eine Verletzungsgefahr vermieden ist, die dadurch besteht, daß ein Deckel herunterfallen könnte. Hierzu ist es erforderlich, daß alle im Verschwenkbereich liegende Maschinenteile niedriger als der Dichtkragen 3 sind. Der Dichtkragen 3 bzw. die untere Seite des Deckels 4 sind als Anschläge z.B. stufenförmig und gegebenenfalls mit Dichtelementen versehen.

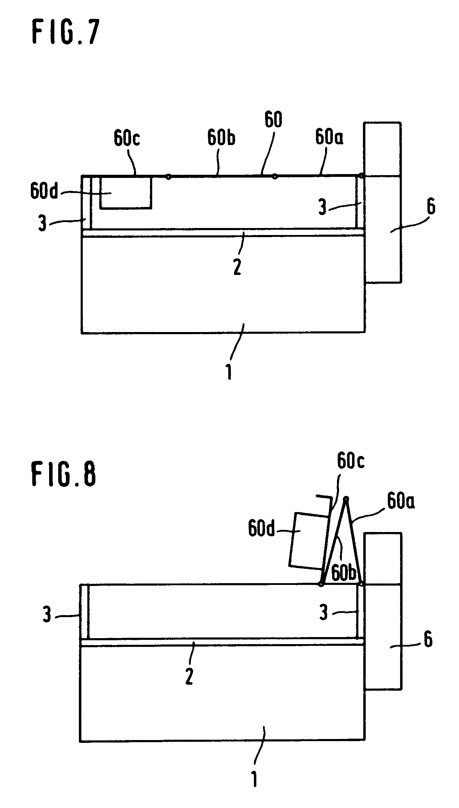

In den Figuren 7 und 8 ist eine andere Ausführungsform eines Deckels 60 dargestellt, der in Art einer Falttüre aber waagerecht auf dem Dichtkragen 3 bewegt werden kann. Der Deckel besteht aus den Deckelabschnitten 60a, 60b und 60c. Der Deckel 60 wird geöffnet, indem der erste Deckelabschnitt 60c zuerst aufgeklappt wird und dann mit den Deckelabschnitten 60b und 60a vorzugsweise in Richtung auf das Schutzgehäuse 6 geschoben wird. Der Deckelabschnitt 60c, der zuerst aufgeklappt werden kann, trägt ein leicht zugängliches Bauelement, z.B. einen Klemmkasten 60d. Ist der Deckel 60 dann zusammengefaltet, wie es in Fig. 8 dargestellt ist, so erlaubt die Ausführung des Deckels 60 den Zugang zum Maschineninneren von drei Seiten, d.h. also Von allen möglichen Zugangsseiten, da von der Stirnseite aus, wo das Schutzgehäuse 6 angebracht ist, der Zugang sowieso behindert ist. Im Bereich des hochklappbaren Deckelteils 60c ist es auch möglich, daß Maschinenteile den Dichtkragen 3 überragen, indem das Deckelteil 60c entsprechend hochgewölbt ist.

Damit hat die Erfindung eine Brennschneidmaschine verfügbar gemacht, die thermisch hoch belastbar, wartungsgünstig, leicht und verfahrenssicher für das Brennschneiden aller Werkstückquerschnitte eingesetzt werden kann. Dabei erlaubt diese Brennschneidmaschine gutes Entbarten von Knüppel-und Blockquerschnitten und ermöglicht darüber hinaus eine kostengünstige Herstellung.

**Patentansprüche**

1. Brennschneidmaschine mit Entbartungseinrichtung zum bartfreien Schneiden von durch Strangguß kontinuierlich erzeugten Werkstükken, wie Vierkant-, Sechskant- oder Rundknüppeln bzw. -blöcken und Brammen aus Stahl, mit einer Einrichtung zum Wärmeschutz, dadurch gekennzeichnet, daß sämtliche Maschineneinrichtungen (10, 20) an einer Grundplatte (2) mit aufgesetztem Dichtkragen (3) befestigt sind, daß alle dem Werkstück zugekehrten Maschinenteile in einem wassergekühlten Trog (1) geschützt untergebracht sind, der ebenfalls an der Grundplatte (2) unten befestigt ist, und daß die Maschine durch einen waagrecht ausschwenkenden oder verschiebbaren, vorzugsweise zusammenfaltbaren Deckel (4, 60) oben abgeschlossen ist, und daß an der Stirnseite der Maschine ein kaminartiges Schlauch- und Brennerschutzgehäuse (6) angeordnet ist.

2. Brennschneidmaschine nach Anspruch 1, dadurch gekennzeichnet, daß der Dichtkragen (3) Durchführungen (17, 27) von an der Grundplatte (2) befindlichen Maschineneinrichtungen (10, 15, 20) besitzt, in diesen Bereichen Dichtelemente (31) trägt und an der Oberseite zum Abdichten des Deckels (4, 60) ausgebildet ist.

3. Brennschneidmaschine nach Anspruch 1 oder 2, dadurch gekennzeichnet, daß der Brennschneidantrieb aus einem Gleichstrommotor (20) mit elektronischem Impulsgeber für die Brennersteuerung aus einem Zahnriemenantrieb (21, 22, 23) und einem Parallelogrammsystem (24) besteht, wobei eine Zahnriemenscheibe (23) an einem unteren Gelenkpunkt des Parallelogrammsystems (24) angeordnet ist und dieses im Bereich des oberen Lenkers (26) einen Brennerhalter (27) trägt, der den Dichtkragen (3) in der Breite des Gießstranges (13) durchdringt und sich vom Ausgangspunkt zur Wegmitte anhebend und anschließend abfallend bewegt

4. Brennschneidmaschine nach einem der Ansprüche 1 bis 4, dadurch gekennzeichnet, daß am Brennerhalter (27) ein schwenkbarer, in Schneidrichtung überragender Kantentasthebel (32) vorgesehen ist, der ein elektrisches Schaltsystem (33) schließt oder unterbricht, bis eine Berührung mit dem Gießstrang (13) stattfindet.

5. Brennschneidmaschine nach Anspruch 4, dadurch gekennzeichnet, daß ein ortsfester Anlaufbolzen (35) vorgesehen ist, gegen den der Kantentasthebel (32) beim Vorlauf aufläuft und vom Gießstrang (13) abgehoben wird, beim Rücklauf dagegen wieder gegen die Seite des Gießstranges (13) gleitet, wobei ein elektrischer Kontakt (33) geschaltet wird, wenn der Kantentasthebel (32) sich vom Gießstrang (13) löst.

6. Brennschneidmaschine nach einem der Ansprüche 1 bis 4, dadurch gekennzeichnet, daß ein auf der Grundplatte (2) gelagerter Preßluftzylinder (10) eine Anklemmeinrichtung (11) betätigt, daß ein drehbar gelagerter Anstellbacken (46) zur parallelen Einstellung der verschiedenen Hebelwinkel für verschiedene Breiten des Gießstranges (13) vorgesehen ist und daß der Anstellbacken (46) als Führung für einen pneumatisch verstellbaren Höhentaster (48) für die Unterseite des Gießstranges (13) ausgebildet ist.

7. Brennschneidmaschine nach einem der Ansprüche 1 bis 6, dadurch gekennzeichnet, daß ein vor den Brennschnitt reichender Entbartungshebel (44) einen drehbar ein- und feststellbaren Brenner- bzw. Düsenhalter für eine autogen-technisch arbeitende Entbartungsdüse (40) trägt, die auf die Unterkanten des Brennschnitts fast parallel zur Unterfläche des Gießstranges (13) mit etwa 5 bis 7 nach oben gerichtet ist.

8. Brennschneidmaschine nach einem der Ansprüche 1 bis 7, dadurch gekennzeichnet, daß der Dichtkragen (3) Schwenk- und Hebellager oder Führungsbahnen zur Lagerung des Deckels (1, 60) besitzt.

9. Brennschneidmaschine nach einem der Ansprüche 1 bis 8, dadurch gekennzeichnet, daß der Dichtkragen (3) abgesetzte bzw. verschieden hohe Anschlagleisten mit oder ohne Dichtelemente besitzt und vorzugsweise alle Maschinenteile (10, 20) auf der Grundplatte (2) überragt.

10. Brennschneidmaschine nach einem der Ansprüche 1 bis 9, dadurch gekennzeichnet, daß der Deckel (60) mit Parallelogrammhebeln anhebbar und gleichzeitig längs- oder querverschiebbar ausgeführt ist und in Richtung auf das Schlauch- und Brennerschutzgehäuse (6) aufschiebbar ist.

11. Brennschneidmaschine nach Anspruch 10, dadurch gekennzeichnet, daß in Bereichen, in denen Maschinenteile den Dichtkragen (3) überragen, der hochklappbare Deckelteil (60c) ausgewölbt ist.

12. Brennschneidmaschine nach Anspruch 10 oder 11, dadurch gekennzeichnet, daß am hochklappbaren Deckelteil (60c) ein schnell und leicht zugängliches Bauelement (60d) angebracht ist.

**Claims**

1. A torch cutting machine with a deburring facility for the burr-free cutting of workpieces produced continuously by continuous casting, e.g square, hexagonal or round billets or blocks and slabs of steel, having a thermal protection facility, characterised in that all the machine facilities (10, 20) are fixed on a baseplate (2) with a fitted sealing collar (3), in that all the machine parts facing the workpiece are accommodated in a water-cooled trough (1) so as to be protected, such trough also being fixed to the bottom of the baseplate (2), and in that the machine is closed at the top by a preferably collapsible cover (4, 60) which is displaceable or swings out horizontally, and in that a hose and torch protective housing (6) in the form of a chimney is disposed at the end face of the machine.

2. A torch cutting machine according to claim 1, characterised in that the sealing collar (3) has bushings (17, 27) for machine facilities (10, 15, 20) disposed on the base plate (2), carries sealing elements (31) in those zones, and is so constructed at the top as to seal off the cover (4, 60).

3. A torch cutting machine according to claim 1 or 2, characterised in that the torch-cutter drive consists of a d.c. motor (20) with an electronic pulse transmitter for the burner control, a toothed-belt drive (21, 22, 23), and a parallelogram system (24), a toothed belt pulley (23) being disposed at a bottom pivot point of the parallelogram system (24) and the latter carrying a torch holder (27) in the region of the top link (26), such holder passing through the sealing collar (3) in the width of the continuous casting (13) and moving with a rising and then falling motion from the starting point to the centre of the travel.

4. A torch cutting machine according to any one of claims 1 to 4, characterised in that a pivotable edge sensing lever (32) projecting in the cutting direction is provided on the torch holder (27) and closes or opens an electrical switching system (33) until contact with the continuous casting (13) takes place.

5. A torch cutting machine according to claim 4, characterised in that a stationary contact pin (35) is provided, against which the edge sensing lever (32) runs during forward movement and is lifted from the continuous casting (13) while on the return movement it again slides against the side of the continuous casting (13), an electrical contact (33) being switched when the edge sensing lever (32) disengages from the continuous casting (13).

6. A torch cutting machine according to any one of claims 1 to 4, characterised in that a compressed air cylinder (10) mounted on the baseplate (2) actuates a clamping facility (11), in that a rotatably mounted engagement jaw (46) is provided for parallel adjustment of the various lever angles for different widths of the continuous casting (13) and in that the adjustment jaw (46) is formed as a guide for a pneumatically adjustable height sensor (48) for the underside of the continuous casting (13).

7. A torch cutting machine according to any one of claims 1 to 6, characterised in that a deburring lever (44) extending in front of the torch cut carries a rotatably adjustable and lockable torch or nozzle holder for a deburring nozzle (40) operating by autogenous technique, such nozzle being directed upwardly towards the bottom edges of the torch cut substantially parallel to the bottom surface of the continuous casting (13) by about 5 to 7°.

8. A torch cutting machine according to any one of claims 1 to 7, characterised in that the sealing collar (3) has pivoting and lever bearings or guideways for mounting the cover (1, 60).

9. A torch cutting machine according to any one of claims 1 to 8, characterised in that the sealing collar (3) has abutment strips which are shouldered or of different heights and which are with or without sealing elements and preferably surmounts all the machine parts (10, 20) on the baseplate (2).

**10.** A torch cutting machine according to any one of claims 1 to 9, characterised in that the cover (60) is constucted to be liftable and simultaneously longitudinally or transversely displaceable by means of parallelogram levers and is adapted to be pushed in the direction of the hose and torch protection housing (6).

**11.** A torch cutting machine according to claim 10, characterised in that the swing-up cover part (60c) is arched in those zones in which machine parts surmount the sealing collar (3).

**12.** A torch cutting machine according to claim 10 or 11, characterised in that a rapidly and easily accessible component (60d) is disposed on the swing-up cover part (60c).

**Revendications**

**1.** Machine à découper au chalumeau comportant un dispositif d'ébarbage, pour la découpe sans barbe de pièces d'oeuvre fabriquées par coulée continue, telles que des lingots ou billettes carrés, hexagonaux ou cylindriques et des brames en acier, ainsi qu'un dispositif pour l'isolation thermique,
caractérisé en ce que
tous les mécanismes (10, 20) de la machine sont fixés sur un socle (2) comportant un collet d'étanchéité (3) rapporté, en ce que toutes les parties de la machine adjacentes à la pièce d'oeuvre sont protégées en étant placées dans une auge (1) refroidie à l'eau, laquelle est fixée de la même manière sur le socle (2), en ce que la machine est fermée vers le haut par un couvercle (4, 60) horizontal pivotant ou coulissant, repliable de préférence et en ce que sur le côté frontal de la machine est placé un boîtier (6) du type cheminée pour la protection du tuyau et du chalumeau.

**2.** Machine à découper au chalumeau selon la revendication 1, caractérisée en ce que le collet d'étanchéité (3) possède des passages (17, 27) pour les mécanismes de la machine (10, 15, 20) situées sur le socle (2), qu'il porte dans ces zones des éléments d'étanchéité (31) et qu'il est constitué sur sa face supérieure de manière à étanchéifier le couvercle (4, 60).

**3.** Machine à découper au chalumeau selon la revendication 1 ou 2, caractérisée en ce que la commande de découpe au chalumeau consiste en un moteur à courant continu (20) à impulseur électronique pour la commande du chalumeau, d'un entraînement à courroie dentée (21, 22, 23) et d'un système à parallélogramme (24), un disque de courroie dentée (23) étant placé à un point inférieur d'articulation du système à parallélogramme (24) et ce dernier portant dans la zone du guide supérieur (26) un porte-chalumeau (27), lequel traverse le collet d'étanchéité (3) dans la largeur de la coulée (13) et se déplace du point de sortie jusqu'à miparcours en se relevant et ensuite en retombant.

**4.** Machine à découper au chalumeau selon l'une des revendications 1 à 3, caractérisé en ce qu' il est prévu sur le porte-chalumeau (27) un levier pivotant de touche de bord (32), qui fait saillie dans la direction de découpe, qui ferme ou coupe un système électrique de commutation (33) jusqu'à contact avec la coulée (13).

**5.** Machine à découper au chalumeau selon la revendication 4, caractérisé en ce qu' il est prévu un goujon d'avancement fixe (35), contre lequel le levier de touche de bord (32) bute en avançant, est soulevé par la coulée (13), glisse à nouveau en revanche en reculant contre le côté de la coulée (13), un contact électrique (33) étant commuté lorsque le levier de touche de bord (32) se détache de la coulée (13).

**6.** Machine à découper au chalumeau selon l'une des revendications 1 à 4, caractérisé en ce qu' un cylindre d'air comprimé (10) logé sur le socle (2) actionne un mécanisme de serrage (11), en ce qu'il est prévu une mâchoire de mise au point (46), logée de manière à pouvoir pivoter, en vue du réglage parallèle des différents angles du levier pour les différentes largeurs de la coulée (13) et en ce que la mâchoire de mise au point (46) a la configuration d'un guide pour un palpeur de hauteurs (48) pneumatique réglable pour la face inférieure de la coulée (13).

**7.** Machine à découper au chalumeau selon l'une des revendications 1 à 6, caractérisé en ce qu' un levier d'ébarbage (44) s'étendant devant la découpe au chalumeau porte un support de chalumeau ou de buse pivotant, réglable et blocable, pour une buse d'ébarbarge (40) travaillant en technique autogène, dirigée vers le haut sous un angle d'environ 5 à 7° sur les arêtes inférieures de la découpe au chalumeau presque parallèlement à la surface inférieure de la coulée (13).

**8.** Machine à découper au chalumeau selon l'une des revendications 1 à 7, caractérisé en ce que

le collet d'étanchéité (3) possède des supports à pivots ou à leviers ou des voies de guidage pour le logement du couvercle (4, 60).

9. Machine à découper au chalumeau selon l'une des revendications 1 à 8, caractérisé en ce que
le collet d'étanchéité (3) possède des listeaux butoirs étagés et de différentes hauteurs avec ou sans élément d'étanchéité et dépasse de préférence tous les mécanismes de la machine (10, 20) fixés sur le socle (2).

10. Machine à découper au chalumeau selon l'une des revendications 1 à 9, caractérisé en ce que
le couvercle (60) peut être soulevé par des leviers de parallélogramme, déplacé simultanément longitudinalement et transversalement et coulisser en direction du boîtier de protection (6) du tuyau et du chalumeau.

11. Machine à découper au chalumeau selon la revendication 10, caractérisée en ce que
la partie du couvercle repliable (60c) est cintrée, dans les zones dans lesquelles des mécanismes de machine dépassent du collet d'étanchéité (3).

12. Machine à découper au chalumeau selon la revendication 10 ou 11, caractérisée en ce qu'
à la partie du couvercle repliable (60c) est raccordé un élément de construction rapidement et facilement accessible.

# FIG.1

# FIG.2

FIG.3

FIG.4

**FIG. 5**

**FIG. 6**

FIG.7

FIG.8